# EUROPÄISCHE PATENTSCHRIFT

(11) **EP 1 979 177 B1**
(45) Veröffentlichungstag und Bekanntmachung des Hinweises auf die Patenterteilung: **31.03.2010**
(21) Anmeldenummer: 07786604.4
(22) Anmeldetag: 07.08.2007
(51) Int. Cl.: B60G 11/27, B60G 7/04, F16F 9/05

(54) **LUFTFEDER FÜR EIN FAHRZEUG**
AIR SPRING FOR A VEHICLE
RESSORT PNEUMATIQUE POUR UN VEHICULE

(30) Priorität: 08.08.2006 DE 102006037034
(43) Veröffentlichungstag der Anmeldung: 15.10.2008
(73) Patentinhaber: SAF-HOLLAND GmbH, 63856 Bessenbach (DE)
(72) Erfinder: WEBER, Karsten, 63741 Aschaffenburg (DE)
(74) Vertreter: Bauer, Clemens
(86) Internationale Anmeldenummer: PCT/EP2007/006978
(87) Internationale Veröffentlichungsnummer: WO 2008/017459

(56) Entgegenhaltungen:
- EP-A- 0 529 486
- EP-A- 1 693 270
- WO-A-79/00411
- DE-A1- 3 423 602
- FR-A- 2 717 237
- GB-A- 2 156 946

## Beschreibung

Die vorliegende Erfindung bezieht sich auf eine Luftfeder für ein Fahrzeug, insbesondere für ein Nutzfahrzeug, sowie auf ein Fahrzeugachssystem mit einem im wesentlichen starren Achskörper, in welchem die Luftfeder integriert ist.

Luftfedersysteme für Fahrzeuge, insbesondere für Nutzfahrzeuge bzw. Lastkraftwagen, sind aus dem Stand der Technik bekannt. Diese bestehen im wesentlichen aus einer Pneumatikanlage mit Steuerung und einem Luftbalg bzw. einer Luftfeder im wesentlichen bestehend aus einem Tauchkolben, einem Luftfederbalg, einem Pufferelement und einer Deckelplatte, wobei zur Höhenregulierung der Tauchkolben in den Luftfederbalg eintauchen kann. Hierbei ist es wünschenswert, daß eine Verladung des Fahrzeugs (z.B. mittels eines Krans) die Funktionsfähigkeit der Luftfeder nicht beeinträchtigt. So ist es üblich, das Fahrzeug bis zum Anschlag des Tauchkolbens an einem Pufferelement abzusenken, so daß der Luftfederbalg im wesentlichen vollkommen eingefahren ist. Anschließendes Blockieren einer Luftzufuhr in das Innere des Luftfederbalgs führt dazu, daß beim Anheben des Fahrzeugs der Luftfederbalg die Achse im wesentlichen hält. Beim äußeren Anheben des Fahrzeugs ziehen die Achsen durch ihr Gewicht die Tauchkolben der Luftfederbälge jedoch etwas nach unten, wodurch in ihrem Inneren ein Unterdruck entsteht, der die Achse am weiteren Ausfedern hindert. Problematisch hierbei ist jedoch, daß der Luftfederbalg aufgrund des hohen Druckunterschieds zwischen Innerem des Luftfederbalgs und Umgebung der Luftfederbalg dazu tendiert, zu knittern bzw. sich einzuschnüren. Dies führt dazu, daß beim Wiederabsetzen des Fahrzeugs Teile des Luftfederbalgs knittern oder eingeklemmt werden können und dieser somit beschädigt wird und nicht mehr korrekt arbeiten kann. Lösungen für dieses Problem sind aus dem Stand der Technik bekannt. So ist es bekannt, beispielsweise einen geteilten Tauchkolben vorzusehen, dessen Unterteil sich beim Herabsinken der Achse (d.h. äußerem Anheben des Fahrzeugs) vom Luftfederbalg trennt und diesen somit nicht in die Länge zieht. Ebenfalls bekannt sind sogenannte Splitter-Anordnungen, beispielsweise aus der EP 0 446 709 B1, bei welchem die Deckelplatte des Luftfederbalgs nicht starr mit dem Fahrzeugrahmen verbunden ist, sondern an einer beweglichen Schwinge geführt wird. Schließlich ist aus dem Stand der Technik bekannt, mittels Fangseilen ein vollständiges Ausfedern der Achse zu verhindern, welche jedoch auch ebenfalls ein vollständiges Anheben des Fahrzeugs mittels der Luftfederbälge verhindert. WO-A-79/00411 zeigt eine Luftfeder mit einem Verdrängerelement, das in der abgesenkten Position den Raum zwischen dem Tauch Kolben und dem Befestigungsabschnitt im wesentlichen ausfüllt.

Es ist somit Aufgabe der vorliegenden Erfindung, eine Luftfeder für ein Fahrzeug, insbesondere für ein Nutzfahrzeug, sowie ein Fahrzeugachssystem vorzusehen, bei welchem der oben erwähnte Knitter-Effekt und die damit verbundenen Nachteile verhindert werden.

Diese Aufgabe wird durch eine Luftfeder für ein Fahrzeug, insbesondere für ein Nutzfahrzeug, mit den Merkmalen des Anspruchs 1 sowie durch ein Fahrzeugachssystem mit den Merkmalen des Anspruchs 18 gelöst. Bevorzugte Ausführungsformen ergeben sich aus den abhängigen Unteransprüchen.

Erfindungsgemäß ist eine Luftfeder für ein Fahrzeug, insbesondere für ein Nutzfahrzeug, vorgesehen, umfassend einen Luftbalg bzw. Luftfederbalg, der einen achsseitigen und einen aufbauseitigen Bereich aufweist, welche zueinander zwischen einer ersten, benachbarten Position und einer zweiten, beabstandeten Position bewegbar sind, einen Tauchkolben, der an dem achsseitigen Bereich des Luftbalgs angeordnet ist, einen Befestigungsabschnitt, um den aufbauseitigen Bereich des Luftbalgs an einem Trägerelement des Fahrzeugs zu befestigen, und ein Verdrängungselement, das an dem Befestigungsabschnitt des Luftbalgs angeordnet ist, wobei das Verdrängungselement in der ersten Position des Luftbalgs den Raum zwischen dem Tauchkolben und dem Befestigungselement im wesentlichen ausfüllt und den Tauchkolben zumindest teilweise umschließt. Die Luftfeder kann also für ein Fahrzeug vorgesehen werden, welches insbesondere als Nutzfahrzeug, ein LKW, ein Anhänger, etc. ausgebildet ist. Der Luftbalg ist vorteilhafterweise in seinem Grundzustand, in welchem er nicht durch äußere Kräfte beeinflußt ist, zylinderförmig ausgebildet, d.h. weist insbesondere vorzugsweise eine schlauch-artige Form auf. Hierbei weist der Luftbalg vorteilhafterweise einen achsseitigen Bereich auf, d.h. einen vorteilhafterweise an seinem distalen Ende vorgesehenen Bereich, welcher ausgelegt ist, achsseitig am Fahrzeug montiert zu werden. Entsprechend weist der Luftbalg ebenfalls vorzugsweise einen aufbauseitigen Bereich auf, d.h. ein distales Ende davon, welches dem achsseitigen Bereich im wesentlichen gegenüberliegt und ausgelegt ist, aufbauseitig am Fahrzeug montiert zu werden. Der achsseitige Bereich und der aufbauseitige Bereich sind zueinander zwischen einer ersten, benachbarten Position und einer zweiten, beabstandeten Position bewegbar. Die Bewegung der beiden distalen Bereiche des Luftbalgs erfolgt vorteilhafterweise im wesentlichen in einer linearen Art und Weise, welche ebenfalls jedoch eine Bewegung entlang einer Kurve die eine leichte Krümmung aufweist, sein kann. Die Bewegungsrichtung entspricht hierbei der Federrichtung. In der Regel erfolgt die Bewegung des Tauchkolbens nicht exakt einer Geraden, sondern folgt einer leicht gekrümmten Kurve, da die Luftfederbälge in der Regel so eingesetzt werden, daß deren achsseitiger Bereich sich auf einer Kreisbahn bewegt, welche durch den Längslenker der Achse definiert ist. In der zweiten, beabstandeten Position weist der Luftbalg eine im Wesentliche zylinderförmige Konfiguration auf. In der ersten, benachbarten Position sind achsseitiger und aufbauseitiger Bereich mit dem minimal möglichen Abstand zueinander angeordnet. Hierbei weist der Luftbalg im wesentlichen eine Konfiguration auf, welche aus zumindest zwei im wesentlichen koaxial angeordneten Zylinderflächen besteht, da der Tauchkolben mit dem daran befestigten achsseitigen Bereich des Luftbalgs in den Luftbalg eintaucht. In anderen Worten ist der Tauchkolben somit an dem achsseitigen Bereich des Luftbalgs derart angeordnet, daß eine Bewegung des Tauchkolbens zu einer entsprechenden Bewegung des achsseitigen Bereichs des Luftbalgs führt. Hierzu gegenüberliegend ist der aufbauseitige Bereich des Luftbalgs über einen Befestigungsabschnitt an einem Trägerelement bzw. Rahmenelement des Fahrzeugs angeordnet bzw. befestigt. Der Befestigungsabschnitt kann einteilig und/oder einstückig mit dem Luftbalg ausgeformt sein, so daß der Befestigungsabschnitt Teil des Luftbalgs ist. In dieser Ausführungsform ist der Luftbalg in seinem Grundzustand somit zylinderförmig, dessen zumindest eines stirnseitiges Ende vorzugsweise luftdicht durch den Befestigungsabschnitt verschlossen ist. In einer bevorzugten Ausführungsform ist der Befestigungsabschnitt jedoch separat vom Luftbalg ausgebildet und mit diesem vorteilhafterweise luftdicht verbunden. Das Verdrängungselement ist an dem Befestigungsabschnitt des Luftbalgs derart angeordnet, daß es sich im Inneren des Luftbalgs, d.h. dem vom Luftbalg umschlossenen Raum, befindet. Vorteilhafterweise ist das Verdrängungselement derart bemessen, daß es in der ersten Position des Luftbalgs, in welcher der Luftbalg vorteilhafterweise das geringste Volumen umschließt, den Raum zwischen dem Tauchkolben und dem Befestigungselement in Federrichtung gesehen im wesentlichen ausfüllt. Das Verdrängungselement kann hierbei vorteilhafterweise ebenfalls als Stütz- und/oder Pufferelement ausgebildet sein, um bei vollständiger Entleerung des Luftbalgs die Gewichtskraft des Fahrzeugaufbaus auf das Fahrzeugachssystem zu übertragen. Durch das Verdrängungselement wird vorteilhafterweise in der ersten Position des Luftbalgs der Bauraum zwischen dem distalen Ende des Tauchkolbens und dem Befestigungsabschnitt ausgefüllt, so daß das verbleibende Restvolumen im Verhältnis zum Gesamtvolumen des Luftbalgs in seiner zweiten Position sehr gering ist. Dies ist besonders vorteilhaft, da somit die Kraft, die nötig wäre, den Luftbalg gegen den von außen wirkenden Atmosphärendruck weiter auseinander zu ziehen, derart erhöht wird, daß diese deutlich über der durch die Masse der Achse verursachten Kraft liegt. In anderen Worten wird somit das durch das Verdrängungselement hervorgerufene sehr geringe Restvolumen im Luftbalg in dessen erster Position das Verhältnis der Volumenänderung zur Änderung des Abstands des achsseitigen vom aufbauseitigen Bereich zueinander und somit die aufzubringende Kraft für eine Beabstandung des achsseitigen und aufbauseitigen Bereichs vorteilhafterweise groß. Hiervon hängt insbesondere der Weg ab, um welchen der Tauchkolben nach unten gezogen wird, bis ein Kräftegleichgewicht herrscht, wenn das Fahrzeug angehoben wird. Durch die erfindungsgemäße Luftfeder wird dieser Weg vorteilhafterweise klein gehalten, so daß die Seitenwandsteifigkeit im aufbauseitigen Bereich des Luftbalgs geringer ausgebildet werden kann.

Vorzugsweise weist das Verdrängungselement eine geometrische Konfiguration im wesentlichen in Form eines Konus auf. In anderen Worten kann das Verdrängungselement im wesentlichen in Form eines Kegelstumpfes ausgebildet sein. Es versteht sich, daß das Verdrängungselement in seinem im wesentlichen senkrecht zur Federrichtung gesehenen Querschnitt eine im wesentlichen kreisförmige Fläche aufspannen kann, jedoch ebenfalls eckig sein bzw. eine vieleckige Fläche aufspannen kann. Das Verdrängungselement kann in der Luftfeder so angeordnet sein, daß dessen verjüngter Bereich dem Tauchkolben zugewandt ist.

Besonders vorteilhafterweise ist jedoch der verjüngte Bereich des Verdrängungselements an dem Befestigungsabschnitt des Luftbalgs befestigt. Infolgedessen ist der Bereich des größeren Querschnitts dem Tauchkolben zugewandt. Diese konische Formgebung erleichtert das Zusammenfahren, d.h. das Positionieren des Luftbalgs in der ersten Position, falls im Moment des Absenkens ein horizontaler seitlicher Versatz zwischen Tauchkolben und Befestigungsabschnitt existiert, d.h. Tauchkolben und Befestigungsabschnitt nicht entlang der Federrichtung zueinander ausgerichtet sind. In der Regel ist die Luftfeder derart vorgesehen, daß am Arbeitspunkt (d.h. in Fahrhöhe) Tauchkolben und Befestigungsabschnitt sich genau übereinander befinden, d.h. entlang der Federrichtung zueinander ausgerichtet sind, so daß die Achse des Tauchkolbens in Richtung der Normalen des Befestigungsabschnitts zeigt bzw. diese fluchten. Im abgesenkten Zustand, d.h. der ersten Position des Luftbalgs, ergibt sich aus der Kreisbahn, auf der sich der Tauchkolben am Längslenker der Achse bewegt, ein Winkel und ein Zentrumsversatz zwischen Tauchkolben und Befestigungsabschnitt. Aufgrund der konischen Form des Verdrängungselements wird dieser Versatz derart kompensiert, daß eine reibungsloses Einrollen des Luftbalgs ermöglicht wird.

Das Verdrängungselement kann vorteilhafterweise rotationssymmetrisch ausgebildet sein. Um jedoch den Winkel und der Versatz zu berücksichtigen, kann das Verdrängungselement ebenfalls asymmetrisch ausgebildet sein, d.h. im wesentlichen durch zwei nicht parallele, zueinander zulaufende Grundflächen, so daß das Verdrängungselement in Form eines Keils aufweist. Vorteilhaft kann auch eine zweifach spiegelsymmetrische Ausführung sein.

Weiterhin vorzugsweise ist die dem Tauchkolben zugewandte Fläche des Verdrängungselements zumindest bereichsweise konkav ausgebildet. So kann die dem Verdrängungselement zugewandte Fläche des Tauchkolbens beispielsweise einen im wesentlichen ringförmigen Rücksprung aufweisen. Alternativ oder zusätzlich kann jedoch die dem Tauchkolben zugewandte Fläche des Verdrängungselements insgesamt konkav ausgebildet sein, insbesondere vorteilhafterweise eine rückspringende, sphärische Oberflächenkonfiguration aufweisen. Hierdurch ist es besonders vorteilhafterweise möglich, den Tauchkolben in Relation zum Verdrängungselement bei Anschlag des Tauchkolbens am Verdrängungselement axial zu positionieren, d.h. in einer Ebene senkrecht zur Federrichtung zu positionieren.

Erfindungsgemäß umschließt das Verdrängungselement in der ersten Position des Luftbalgs den Tauchkolben zumindest teilweise. In anderen Worten ist zumindest bereichsweise der Tauchkolben vom Verdrängungselement umgeben. Insbesondere besonders vorzugsweise ist das Verdrängungselement zumindest teilweise zwischen der umfänglichen Außenwandung des Tauchkolbens und dem aufbauseitigen Bereich bzw. sich einem daran anschließenden Bereich des Luftbalgs angeordnet. Somit wird vorteilhafterweise das Restvolumen des Luftbalgs in dessen ersten Position zusätzlich verringert. Bei einer konkaven Ausgestaltung des Verdrängungselements übernimmt das Verdrängungselement im wesentlichen die Funktion eines Art Deckels, welcher bei eingefahrener Luftfeder (d.h. erste Position des Luftbalgs) das dem Verdrängungselement zugewandte distale Ende des Tauchkolbens sowie zumindest einen Teil der daran anschließenden seitlichen, umfänglichen Wandung des Tauchkolbens abdeckt bzw. umschließt bzw. umgibt bzw. überspannt.

Zweckmäßigerweise weist das Verdrängungselement eine im wesentlichen gekrümmte, vorzugsweise kreisrunde Querschnittsform auf. Der Querschnitt ist hierbei im wesentlichen senkrecht zur Federrichtung definiert. Besonders vorteilhafterweise entspricht die Querschnittsform des Verdrängungselements im wesentlichen derjenigen des Luftbalgs.

Weiterhin zweckmäßigerweise ist das Verdrängungselement aus einem rückstellfähigen Material ausgebildet. Dies ist insbesondere vorteilhaft bei einem Luftbalg in der ersten Position, in welchem das Verdrängungselement vorzugsweise auf dem Tauchkolben aufliegt und somit die vom Aufbau des Fahrzeugs verursachte Gewichtskraft direkt über Verdrängungselement und Tauchkolben in das Fahrzeugachssystem übergeleitet wird. Infolgedessen ist zumindest eine gewisse Restfederung des Systems gewährleistet.

Vorteilhafterweise besteht das Verdrängungselement aus einem Material, dessen Dichte im wesentlichen zumindest 1,1 kg/m³, vorzugsweise mindestens 1,2 kg/m³ beträgt. Insbesondere vorteilhafterweise besteht das Verdrängungselement aus einem Material, dessen Dichte größer als die Dichte des dem Luftbalg zugeführten Fluids bzw. Gases ist. Somit wird vorteilhafterweise sichergestellt, daß durch das Verdrängungselement das in dem Luftbalg befindliche Gas verdrängt wird. Zusätzlich oder alternativ kann das Verdrängungselement ebenfalls im wesentlichen hohl ausgebildet sein, wobei die Hülle des Verdrängungselements dann im wesentlichen fluid- bzw. gasdicht ausgebildet ist.

Vorzugsweise ist der Befestigungsabschnitt als am distalen aufbauseitigen Bereich des Luftbalgs angeordnete Verschlußplatte ausgebildet. Die Verschlußplatte ist hierbei vorteilhafterweise derart mit dem Luftbalg befestigt, daß eine fluid- bzw. gasdichte Verbindung zwischen Verschlußplatte und Luftbalg vorgesehen ist.

Der Befestigungsabschnitt und das Verdrängungselement können als separate Elemente ausgebildet sein. Vorteilhafterweise können Befestigungsabschnitt und Verdrängungselement jedoch einteilig bzw. einstückig ausgebildet sein.

In einer weiteren bevorzugten Ausführungsform ist der Befestigungsabschnitt als am distalen aufbauseitigen Bereich des Luftbalgs angeordneter Verschlußzylinder ausgebildet, dessen Seitenwandung im wesentlichen starr ist. Der Befestigungsabschnitt bzw. Verschlußzylinder ist somit im wesentlichen als Behältnis bzw. Topf ausgebildet und nimmt in der ersten Position des Luftbalgs den Tauchkolben zumindest teilweise in seinem Inneren auf. In anderen Worten umschließt eine Seitenwandung des Verschlußzylinders in der ersten Position des Luftbalgs den Tauchkolben zumindest teilweise. Am Rand des Verschlußzylinders ist vorteilhafterweise der aufbauseitige Bereich des Luftbalgs befestigt. Infolgedessen wird ein Teil des Luftbalgs im oberen, aufbauseitigen Bereich durch einen starren Teil, d.h. den Verschlußzylinder, ersetzt. Infolgedessen kann sich dieser Bereich aufgrund der starren bzw. steifen Seitenwandung nicht einschnüren bzw. knicken. In anderen Worten verbleibt in diesem Bereich der Querschnitt im wesentlichen unabhängig vom Belastungszustand des Luftbalgs konstant.

In einer weiteren bevorzugten Ausführungsform weist der Luftbalg zumindest im aufbauseitigen Bereich Versteifungselemente auf, um die radiale Steifigkeit des Luftbalgs zu erhöhen. Die Versteifungselemente können als Gewebelage, Verstärkungslage, Ringe aus Stahl oder Stahlgeflecht ausgebildet sein, welches im Luftbalgmaterial eingesetzt bzw. einvulkanisiert ist. Hierdurch wird eine radiale Steifigkeit gewährleistet, ohne die axiale und laterale Beweglichkeit des Luftbalgs einzuschränken. Insbesondere wird hierdurch einer Einschnürung oder Beulung in Richtung Luftbalg-Zentrum entgegengewirkt.

Weiterhin bevorzugt weist der Luftbalg am Ende oder benachbart zum achsseitigen Bereich ein erstes Eingriffsmittel auf, welches ausgelegt ist, mit einem zweiten Eingriffsmittel des Tauchkolbens in Eingriff zu gelangen. Es kann somit eine Luftfeder für ein Fahrzeug, insbesondere Nutzfahrzeug, umfassend einen Luftbalg, der einen achsseitigen und einen aufbauseitigen Bereich aufweist, und einen Tauchkolben, der an dem achsseitigen Bereich des Luftbalgs angeordnet ist, vorgesehen sein, wobei der Luftbalg am oder benachbart zum achsseitigen Bereich ein erstes Eingriffsmittel aufweist, welches ausgelegt ist, mit einem zweiten Eingriffsmittel des Tauchkolbens, welches am oder benachbart zum distalen Ende des Tauchkolbens, an welchem der Luftbalg befestigt ist, vorgesehen ist, in Eingriff zu gelangen. Es kann somit verhindert werden, daß der innere, am Tauchkolben anliegende Teil des Balges (d.h. der achsseitige Bereich) in der ersten Position des Luftbalgs bei einem Anheben des Fahrzeugs nicht über die Wandung des Tauchkolbens nach oben gleiten kann bzw. nach oben gezogen werden kann. Dies ist besonders vorteilhaft, da die ansonsten entstehenden Falten einerseits der Vakuumbildung entgegenwirken und andererseits beim Absetzen des Fahrzeugs über dem Tauchkolben eingeklemmt werden würden. Es wird jedoch vorteilhafterweise weiterhin erlaubt, daß der Luftbalg bis zu seiner Befestigung am Kopf des Tauchkolbens abrollen kann, wenn der Luftbalg in die zweite Position bewegt wird.

Zweckmäßigerweise ist das erste Eingriffsmittel des Luftbalgs als radiale Verjüngung ausgebildet, die vorzugsweise durch ein Stützelement verstärkt ist. Die radiale Verjüngung kann vorzugsweise derart geschaffen sein, daß ein Stützelement in Form eines Rings aus Stahl, Stahlgeflecht oder einem anderen versteifenden Material am Luftbalg angeordnet bzw. in diesen eingesetzt oder einvulkanisiert ist, so daß sich eine Verdickung, ein Wulst oder eine Stufe ergibt.

Weiterhin zweckmäßigerweise ist das zweite Eingriffsmittel des Tauchkolbens als radial umlaufende Nut ausgebildet, welche vorzugsweise am oder benachbart zum distalen Ende des Tauchkolbens angeordnet ist. In anderen Worten ist die Nut am oder benachbart zum Horn des Tauchkolbens bzw. dem Bereich der Befestigung des Luftbalgs am Tauchkolben angeordnet. Die Nut kann insbesondere an einer Seitenwand bzw. Umfangswand des Tauchkolbens vorgesehen sich und sich um diesen ringförmig erstrecken. Insbesondere vorteilhafterweise entspricht die Form der Nut derjenigen der Verjüngung des Luftbalgs, so daß sich eine Art Formschluß zwischen erstem und zweitem Eingriffsmittel (d.h. Balg und Tauchkolben) ergibt, der einem Verrutschen des Luftbalgs auf dem Tauchkolben in Federrichtung bei einem Anheben des Fahrzeugs entgegenwirkt. Vorteilhafterweise wird jedoch weiterhin erlaubt, daß der Luftbalg bis zu seiner Befestigung am Kopf des Tauchkolbens bei Normalbetrieb, d.h. einer Bewegung des Luftbalgs in die zweite Position, abrollen kann.

Infolgedessen stehen vorteilhafterweise das erste und zweite Eingriffsmittel in der zweiten Position des Luftbalgs außer Eingriff.

Vorzugsweise ist das Verhältnis der Querschnittsfläche Luftbalg zur Querschnittsfläche Tauchkolben im wesentlichen zwischen 1,1 - 1,5, vorteilhafterweise im wesentlichen zwischen 1,1 - 1,25. Der Querschnitt wird hierbei im wesentlichen senkrecht zur Federrichtung definiert. Durch ein derartig bemessenes Querschnittsflächenverhältnis wird die Volumenänderung pro Änderung des Abstands Tauchkolben zu Befestigungsabschnitt ausreichend groß gestaltet, um die Kraft, die nötig wäre, den im wesentlichen in der ersten Position befindlichen Luftbalg gegen den von außen wirkenden Atmosphärendruck weiter auseinander zu ziehen, deutlich über der durch die Masse der Achsen verursachten Kraft liegt. Somit wird eine sichere Positionierung bzw. ein sicheres Halten des Achssystems bei einem angehobenen Fahrzeug gewährleistet.

Vorteilhafterweise ist an dem Luftbalg eine Ventilvorrichtung vorgesehen, um eine Zufuhr von Luft in den Luftbalg, insbesondere in dessen erster Position, zu verhindern. Es wird somit eine Ventilvorrichtung geschaffen, welche verhindert, daß das Arbeitsliquid bzw. die Luft in den Luftbalg einströmt, wenn das Fahrzeug angehoben wird, so daß eine Bewegung des Luftbalgs in die zweite Position im wesentlichen unterbunden wird.

Besonders bevorzugt weist die Ventilvorrichtung zumindest eine Ventileinheit an dem Auslaß des Luftbalgs auf. Diese kann vorzugsweise manuell oder automatisch betätigbar sein.

Weiterhin erfindungsgemäß ist ein Fahrzeugachssystem mit einem im wesentlichen starren Achskörper vorgesehen, wobei an dem Achskörper zumindest eine erfindungsgemäße Luftfeder angeordnet ist.

Weitere Vorteile und Merkmale ergeben sich aus der nachfolgenden Beschreibung bevorzugter Ausführungsformen der Erfindung mit Bezug auf die beigefügten Figuren. Es zeigen:
- Fig. 1: eine Querschnittsansicht einer ernsten Ausführungsform der erfindungsgemäßen Luftfeder.
- Fig. 2: eine Querschnittsansicht einer zweiten Ausführungsform der erfindungsgemäßen Luftfeder.

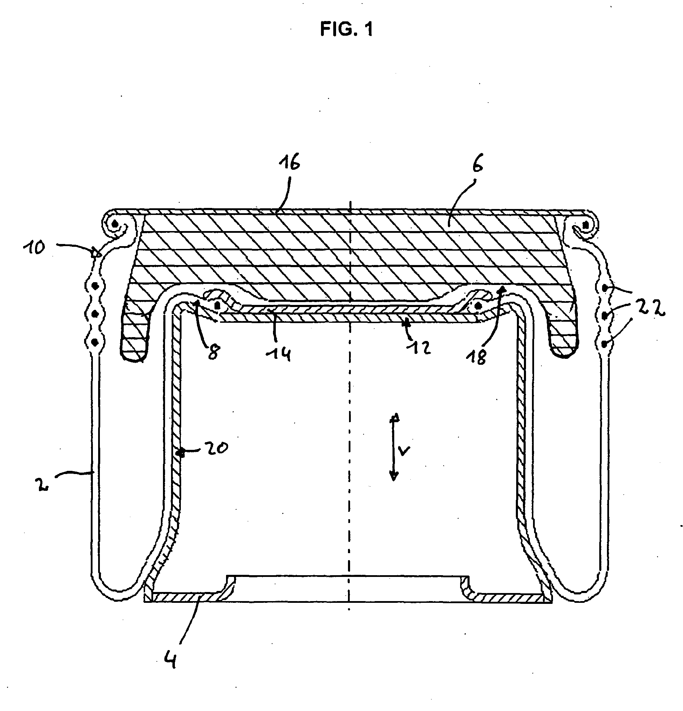

In Fig. 1 ist eine Querschnittsansicht einer ersten Ausführungsform der erfindungsgemäßen Luftfeder für ein Fahrzeug dargestellt. Die Luftfeder umfaßt einen Luftfederbalg bzw. Luftbalg 2, einen Tauchkolben 4 sowie ein Verdrängungselement 6.

Der Luftbalg 2 ist vorteilhafterweise im wesentlichen zylinderförmig ausgebildet und weist einen achsseitigen Bereich 8 sowie einen aufbauseitigen Bereich 10 auf. Der achsseitige Bereich 8 liegt dem aufbauseitigen Bereich 10 im wesentlichen gegenüber. Der Luftbalg 2 kann zwischen einer in Fig. 1 dargestellten ersten Position, in welcher der achsseitige Bereich 8 und der aufbauseitige Bereich 10 im wesentlichen benachbart zueinander stehen, und einer zweiten Position bewegt werden, in welcher der achsseitige Bereich 8 und der aufbauseitige Bereich 10 derart zueinander beabstandet sind, daß der Luftbalg 2 eine im wesentlichen schlauch- bzw. rohrförmige Konfiguration aufweist. Die Bewegung des Luftbalgs zwischen der ersten und zweiten beabstandeten Position erfolgt hierbei im wesentlichen entlang einer Federrichtung v.

Der Tauchkolben 4 weist vorzugsweise eine im wesentlichen zylindrische oder konische Konfiguration auf. Das distale Ende 12 des Tauchkolbens 4 weist ein Befestigungsmittel 14 auf, um den achsseitigen Bereich 8 des Luftbalgs 2 am Tauchkolben 4 zu befestigen. Die Befestigung über das Befestigungsmittel 14 kann vorteilhafterweise durch eine Verklemmung bzw. Verspannung eines am achsseitigen distalen Ende des Luftbalgs 2 vorgesehenen Wulstes erfolgen.

Der dem achsseitigen Bereich 8 im wesentlichen gegenüberliegende aufbauseitige Bereich 10 des Luftbalgs 2 ist an einem Befestigungsabschnitt befestigt bzw. angeordnet. Der Befestigungsabschnitt kann als am distalen aufbauseitigen Bereich 10 des Luftbalgs 2 angeordnete Verschlußplatte 16 ausgebildet sein, welche den Luftbalg 2 im aufbauseitigen Bereich 10 zur Umgebung im wesentlichen fluid- bzw. gasdicht abschließt. Über dem Befestigungsabschnitt bzw. die Verschlußplatte 16 ist der aufbauseitige Bereich 10 des Luftbalgs 2 an einem Trägerelement bzw. Rahmenelement des Fahrzeugs befestigbar. Entsprechend stellt der Tauchkolben 4 das Befestigungsmittel des achsseitigen Bereichs 8 des Luftbalgs 2 an dem Achsensystem des Fahrzeugs dar.

Das Verdrängungselement 6 ist an dem Befestigungsabschnitt bzw. der Verschlußplatte 16 angeordnet bzw. an dieser befestigt. Infolgedessen erfolgt keine Bewegung des Verdrängungselements 6 bei einer Bewegung des achsseitigen Bereichs 8 des Luftbalgs 2 bzw. des Tauchkolbens 4, da das Verdrängungselement 6 im wesentlichen ortsfest bezüglich des aufbauseitigen Bereichs 10 des Luftbalgs 2 bzw. bezüglich des Befestigungsabschnitts bzw. der Verschlußplatte 16 angeordnet ist. Das Verdrängungselement 6 weist vorteilhafterweise im wesentlichen die Form eines Konus auf, wobei besonders bevorzugterweise der verjüngte Bereich des Verdrängungselements 6 an dem Befestigungsabschnitt bzw. der Verschlußplatte 16 befestigt ist. Somit ragt der Bereich größeren Querschnitts des Verdrängungselements 6 in den vom Luftbalg 2 umschlossenen Raum hinein, d.h. ist dem Tauchkolben 4 zugewandt. Besonders vorteilhafterweise weist das Verdrängungselement 6 eine konkave Oberflächengeometrie auf, um somit in der in Fig. 1 dargestellten ersten Position des Luftbalgs 2 den Tauchkolben 4 zumindest teilweise zu umschließen. Hierdurch wird vorteilhafterweise der Raum zwischen Tauchkolben 4 und Befestigungsabschnitt bzw. Verschlußplatte 16 derart durch das Verdrängungselement 6 ausgefüllt, daß das verbleibende Restvolumen im Luftbalg 2 möglichst gering ist. Insbesondere kann das Verdrängungselement 6 derart konkav ausgebildet sein, daß eine dem Tauchkolben 4 zugewandte Oberfläche einen ringförmigen Rücksprung 18 aufweist, der zusätzlich der Positionierung des Tauchkolbens 4 in der ersten Position des Luftbalgs 2 dient. Besonders vorteilhafterweise ragt das Verdrängungselement 6 zumindest teilweise in den zwischen Außenwandung bzw. Umfangswand 20 des Tauchkolbens 4 (bzw. dem daran im wesentlichen anliegenden achsseitigen Bereich 8 und hierzu benachbarten bzw. anschließenden Bereich des Luftbalgs 2) und dem aufbauseitigen Bereich 10 (bzw. hierzu benachbarten bzw. anschließenden Bereich des Luftbalgs 2) definierten Raum hinein, um somit das in der ersten Position des Luftbalgs 2 vorhandene Restvolumen zusätzlich zu verringern.

Um dem eingangs erwähnten Knittereffekt entgegenzuwirken, weist der Luftbalg 2 im oder benachbart zum aufbauseitigen Bereich 10 Versteifungselemente 22 auf. Die Versteifungselemente 22 sind insbesondere vorgesehen, um die radiale Steifigkeit des Luftbalgs 2 zu erhöhen, ohne die axiale und laterale Beweglichkeit des Luftbalgs 2 einzuschränken. Die Versteifungselemente 22 können insbesondere als Ringe aus Stahl, Stahlgeflecht oder einem anderen versteifenden Material ausgebildet sein, welches am Luftbalg 2 angeordnet, in diesen eingesetzt oder einvulkanisiert sind.

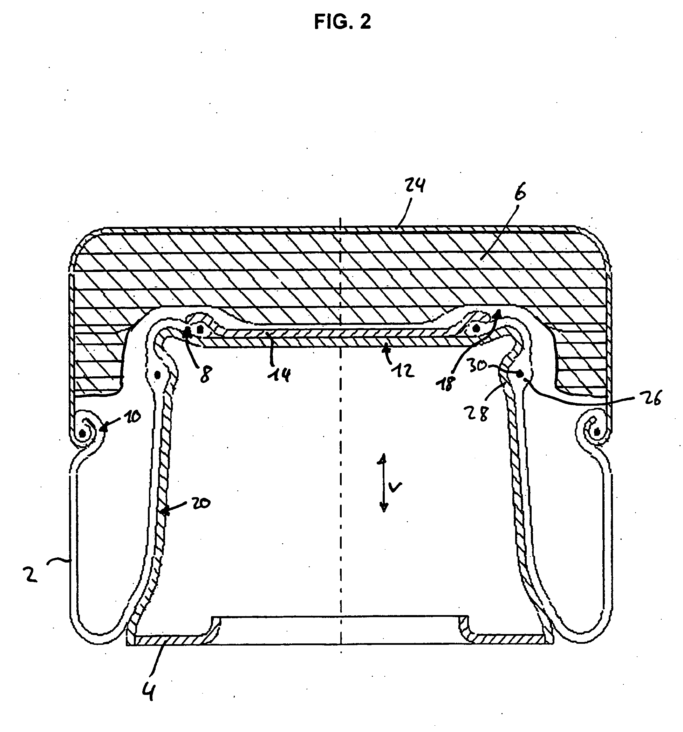

Eine weitere Möglichkeit der Versteifung der Außenwände des Luftbalgs 2 ist in **Fig. 2** dargestellt, wobei die mit der ersten Ausführungsform identischen Elemente mit gleichen Bezugsziffern versehen sind. Der Befestigungsabschnitt ist hierbei jedoch als am distalen aufbauseitigen Bereich 10 des Luftbalgs 2 angeordneter Verschlußzylinder 24 ausgebildet, dessen oberes, dem Fahrzeugrahmen zugewandtes Ende verschlossen ist, um somit in Form eines Behältnisses oder Topfes gestaltet zu sein. Die Seitenwandung des Verschlußzylinders 24 ist im wesentlichen starr bzw. fest ausgebildet und umschließt in der ersten Position des Luftbalgs 2 den Tauchkolben 4 zumindest teilweise. Infolgedessen wird ein Teil des Luftbalgs 2, nämlich der äußere obere Bereich bzw. aufbauseitige Bereich durch einen starren bzw. festen Teil ersetzt, so daß der eingangs erwähnte Knittereffekt bzw. eine Einschnürung oder Beulung aufgrund der Druckdifferenz zwischen dem Inneren des Luftbalgs und der Umgebung verhindert wird.

Der Luftbalg 2 weist am oder benachbart zum achsseitigen Bereich 8 ein erstes Eingriffsmittel 26 auf, welches ausgelegt ist, mit einem zweiten Eingriffsmittel 28 des Tauchkolbens 4 in Eingriff zu gelangen. Das erste Eingriffsmittel 26 des Luftbalgs 2 ist als radiale Verjüngung bzw. Verdickung bzw. als Wulst oder Stufe ausgebildet, welches vorzugsweise durch ein Stützelement 30 verstärkt ist. Das Stützelement 30 kann ein Ring aus Stahl, Stahlgeflecht oder anderem versteifenden Material sein, welcher am Luftbalg 2 angeordnet, in diesen eingesetzt oder einvulkanisiert ist. Entsprechend der Ausgestaltung des ersten Eingriffsmittels 26 ist das zweite Eingriffsmittel 28 geformt. Dieses ist insbesondere als radial umlaufende Nut im Tauchkolben 4 ausgebildet, welche vorzugsweise am oder benachbart zum distalen Ende 12 des Tauchkolbens 4 an der umfangswand 20 angeordnet ist. Hierdurch wird einem Verrutschen des Luftbalgs 2 auf dem Tauchkolben 4 in Federrichtung v bei einem in der ersten Position befindlichen Luftbalg 2 entgegengewirkt, wobei aber weiterhin gewährleistet ist, daß der Luftbalg 2 - insbesondere in der zweiten Position - bis zu seiner Befestigung am Befestigungsmittel 14 am distalen Ende 12 des Tauchkolbens 4 abrollen kann. Infolgedessen stehen das erste Eingriffsmittel 26 und zweite Eingriffsmittel 28 in der zweiten Position des Luftbalgs 2 nicht in Eingriff.

### Bezugszeichenliste

- 2: Luftbalg
- 4: Tauchkolben
- 6: Verdrängungselement
- 8: achsseitiger Bereich
- 10: aufbauseitiger Bereich
- 12: distales Ende
- 14: Befestigungsmittel
- 16: Verschlußplatte
- 18: ringförmiger Rücksprung
- 20: Umfangswand
- 22: Versteifungselement
- 24: Verschlußzylinder
- 26: erstes Eingriffsmittel
- 28: zweites Eingriffsmittel
- 30: Stützelement
- v: Federrichtung

## Patentansprüche

1. Luftfeder für ein Fahrzeug, insbesondere für ein Nutzfahrzeug, umfassend
einen Luftbalg (2), der einen achsseitigen (8) und einen aufbauseitigen (10) Bereich aufweist, welche zueinander zwischen einer ersten, benachbarten Position und einer zweiten, beabstandeten Position bewegbar sind,
einen Tauchkolben (4), der an dem achsseitigen Bereich (8) des Luftbalgs (2) angeordnet ist,
einen Befestigungsabschnitt (16, 24), um den aufbauseitigen Bereich (10) des Luftbalgs (2) an einem Trägerelement des Fahrzeugs zu befestigen, und
ein Verdrängungselement (6), das an dem Befestigungsabschnitt (16, 24) des Luftbalgs (2) angeordnet ist,
wobei das Verdrängungselement (6) in der ersten Position des Luftbalgs (2) den Raum zwischen dem Tauchkolben (4) und dem Befestigungsabschnitt (16, 24) im wesentlichen ausfüllt und den Tauchkolben (4) zumindest teilweise umschließt.

2. Luftfeder nach Anspruch 1, wobei das Verdrängungselement (6) eine geometrische Konfiguration im wesentlichen in Form eines Konus aufweist.

3. Luftfeder nach Anspruch 2, wobei der verjüngte Bereich des Verdrängungselements (6) an dem Befestigungsabschnitt (16, 24) des Luftbalgs (2) befestigt ist.

4. Luftfeder nach einem der vorhergehenden Ansprüche, wobei die dem Tauchkolben (4) zugewandte Fläche des Verdrängungselements (6) zumindest bereichsweise konkav ausgebildet ist.

5. Luftfeder nach einem der vorhergehenden Ansprüche, wobei das Verdrängungselement (6) eine im wesentlichen gekrümmte, vorzugsweise kreisrunde Querschnittsform aufweist.

6. Luftfeder nach einem der vorhergehenden Ansprüche, wobei das Verdrängungselement (6) aus einem rückstellfähigen Material ausgebildet ist.

7. Luftfeder nach einem der vorhergehenden Ansprüche, wobei das Verdrängungselement (6) aus einem Material besteht, dessen Dichte im wesentlichen zumindest etwa 1,1 kg/m³, vorzugsweise zumindest etwa 1,2 kg/m³, beträgt.

8. Luftfeder nach einem der vorhergehenden Ansprüche, wobei der Befestigungsabschnitt (16) als am distalen aufbauseitigen Bereich des Luftbalgs (2) angeordnete Verschlußplatte (16) ausgebildet ist.

9. Luftfeder nach einem der vorhergehenden Ansprüche, wobei der Befestigungsabschnitt (24) als am distalen aufbauseitigen Bereich des Luftbalgs (2) angeordneter Verschlußzylinder (24) ausgebildet ist, dessen Seitenwandung vorzugsweise im wesentlichen starr ist.

10. Luftfeder nach einem der vorhergehenden Ansprüche, wobei der Luftbalg (2) zumindest im aufbauseitigen Bereich (10) Versteifungselemente (22) aufweist, um die radiale Steifigkeit des Luftbalgs (2) zu erhöhen.

11. Luftfeder nach einem der vorhergehenden Ansprüche, wobei der Luftbalg (2) am oder benachbart zum achsseitigen Bereich (8) ein erstes Eingriffsmittel (26) aufweist, welches ausgelegt ist, mit einem zweiten Eingriffsmittel (28) des Tauchkolbens (4) in Eingriff zu gelangen bzw. gebracht zu werden.

12. Luftfeder nach Anspruch 11, wobei das erste Eingriffsmittel (26) des Luftbalgs (2) als radiale Verjüngung ausgebildet ist, die vorzugsweise durch ein Stützelement (30) verstärkt ist.

13. Luftfeder nach einem der Ansprüche 11 oder 12, wobei das zweite Eingriffsmittel (28) des Tauchkolbens (4) als radial umlaufende Nut ausgebildet ist, welche vorzugsweise am oder benachbart zum distalen Ende (12) des Tauchkolbens (4) angeordnet ist.

14. Luftfeder nach einem der Ansprüche 11-13, wobei das erste und zweite Eingriffsmittel (26, 28) in der zweiten Position des Luftbalgs (2) außer Eingriff stehen.

15. Luftfeder nach einem der vorhergehenden Ansprüche, wobei das Verhältnis von Querschnittsfläche Luftbalg (2) zu Querschnittsfläche Tauchkolben (4) im wesentlichen etwa 1,1 - 1,5, vorteilhafterweise im wesentlichen etwa 1,1 - 1,25, ist.

16. Luftfeder nach einem der vorhergehenden Ansprüche, wobei an dem Luftbalg (2) eine Ventilvorrichtung vorgesehen ist, um eine Zufuhr von Luft in den Luftbalg (2), insbesondere in dessen erster Position, zu verhindern.

17. Luftfeder nach Anspruch 16, wobei die Ventilvorrichtung zumindest eine Ventileinheit an dem Auslaß des Luftbalgs (2) aufweist, welche vorzugsweise manuell oder automatisch betätigbar ist.

18. Fahrzeugachssystem mit einem im wesentlichen starren Achskörper,
wobei an dem Achskörper zumindest eine Luftfeder nach einem der vorhergehenden Ansprüche angeordnet ist.

## Claims

1. Air spring for a vehicle, especially for a commercial vehicle, comprising
an air bellows (2), which has an axle-side region (8) and a superstructure-side region (10), which regions are movable with respect to each other between a first, adjacent position and a second, spaced-apart position,
a plunger (4) which is arranged on the axle-side region (8) of the air bellows (2),
a fastening section (16, 24) in order to fasten the superstructure-side region (10) of the air bellows (2) to a support element of the vehicle, and
a displacement element (6) which is arranged on the fastening section (16, 24) of the air bellows (2),
wherein the displacement element (6) essentially fills the space between the plunger (4) and the fastening section (16, 24) and at least partly encloses the plunger (2) in the first position of the air bellows (2).

2. Air spring per claim 1, wherein the displacement element (6) has a geometrical configuration essentially in the shape of a cone.

3. Air spring per claim 2, wherein the tapering region of the displacement element (6) is fastened on the fastening section (16, 24) of the air bellows (2).

4. Air spring per one of the preceding claims, wherein the surface of the displacement element (6) facing the plunger (4) is at least partly concave in configuration.

5. Air spring per one of the preceding claims, wherein the displacement element (6) has an essentially curved, preferably round circular cross section shape.

6. Air spring per one of the preceding claims, wherein the displacement element (6) is formed from a material which can rebound.

7. Air spring per one of the preceding claims, wherein the displacement element (6) consists of a material whose density is essentially at least 1.1 kg/m³, preferably at least 1.2 kg/m³.

8. Air spring per one of the preceding claims, wherein the fastening section (16) is configured as a cover plate (16) arranged at the distal superstructure-side region of the air bellows (2).

9. Air spring per one of the preceding claims, wherein the fastening section (24) is configured as a cover cylinder (24) arranged on the distal superstructure-side region of the air bellows (2), whose side wall is basically rigid.

10. Air spring per one of the preceding claims, wherein the air bellows (2) has stiffening elements (22), at least in the superstructure-side region (10), in order to heighten the radial stiffness of the air bellows (2).

11. Air spring per one of the preceding claims, wherein the air bellows (2) has at or adjacent to the axle-side region (8) a first engaging means (26), which is designed to come or be brought into engagement with a second engagement means (28) of the plunger (4).

12. Air spring per claim 11, wherein the first engaging means (26) of the air bellows (2) is fashioned as a radial constriction, which is preferably reinforced by a support element (30).

13. Air spring per one of claims 11 or 12, wherein the second engaging means (28) of the plunger (4) is fashioned as a radially circumferential groove, which is preferably arranged on or adjacent to the distal end (12) of the plunger (4).

14. Air spring per one of claims 11 to 13, wherein the first and second engaging means (26, 28) are disengaged in the second position of the air bellows (2).

15. Air spring per one of the preceding claims, wherein the ratio of the cross sectional area of the air bellows (2) to the cross sectional area of the plunger (4) is basically between 1.1 to 1.5, preferably essentially between around 1.1 to 1.25.

16. Air spring per one of the preceding claims, wherein a valve device is provided on the air bellows (2) in order to prevent an intake of air in the air bellows (2), especially in its first position.

17. Air spring per claim 16, wherein the valve device has at least one valve unit at the outlet of the air bellows (2), which is preferably manually or automatically activatable.

18. Vehicle axle system with an essentially rigid axle body, and at least one air spring according to one of the preceding claims is arranged on the axle body.

## Revendications

1. Ressort pneumatique pour un véhicule, en particulier pour un véhicule utilitaire, comprenant
un soufflet à air (2) qui comprend une zone côté essieu (8) et une zone côté superstructure (10), lesquelles sont déplaçables entre une première position où elles sont voisines et une seconde position où elles sont éloignées,
un piston plongeur (4), agencé sur la zone côté essieu (8) du soufflet à air (2),
un tronçon de fixation (16, 24) afin de fixer la zone côté superstructure (10) du soufflet à air (2) sur un élément porteur du véhicule, et
un élément de refoulement (6) qui est agencé sur le tronçon de fixation (16, 24) du soufflet à air (2),
dans lequel, dans la première position du soufflet à air (2), l'élément de refoulement (6) remplit sensiblement l'espace entre le piston plongeur (4) et le tronçon de fixation (16, 24), et entoure au moins partiellement le piston plongeur (4).

2. Ressort pneumatique selon la revendication 1, dans lequel l'élément de refoulement (6) présente une configuration géométrique sensiblement sous la forme d'un cône.

3. Ressort pneumatique selon la revendication 2, dans lequel la zone rétrécie de l'élément de refoulement (6) est fixée sur le tronçon de fixation (16, 24) du soufflet à air (2).

4. Ressort pneumatique selon l'une des revendications précédentes, dans lequel la surface, tournée vers le piston plongeur (4), de l'élément de refoulement (6) est réalisée concave au moins par zone.

5. Ressort pneumatique selon l'une des revendications précédentes, dans lequel l'élément de refoulement (6) présente une forme à section transversale sensiblement incurvée, de préférence circulaire.

6. Ressort pneumatique selon l'une des revendications précédentes, dans lequel l'élément de refoulement (6) est réalisé en un matériau capable de reprendre sa forme.

7. Ressort pneumatique selon l'une des revendications incidentes, dans lequel l'élément de refoulement (6) est en un matériau dont la densité s'élève sensiblement à au moins environ 1,1 kg/m³, de préférence au moins environ 1,2 kg/m³.

8. Ressort pneumatique selon l'une des revendications précédentes, dans lequel le tronçon de fixation (16) est réalisé sous la forme d'une plaque d'obturation (16) agencée sur la zone distale côté superstructure du soufflet à air (2).

9. Ressort pneumatique selon l'une des revendications précédentes, dans lequel le tronçon de fixation (24) est réalisé sous forme d'un cylindre d'obturation (24) agencé sur la zone distale côté superstructure du soufflet à air (2), dont la paroi latérale est de préférence sensiblement rigide.

10. Ressort pneumatique selon l'une des revendications précédentes, dans lequel le soufflet à air (2) comprend, au moins dans la zone côté superstructure (10), des éléments de rigidification (22) pour augmenter la rigidité radiale du soufflet à air (2).

11. Ressort pneumatique selon l'une des revendications précédentes, dans lequel le soufflet à air (2) comprend, sur la zone côté essieu (8) ou au voisinage de celle-ci, un premier moyen d'engagement (26) qui est conçu pour parvenir ou pour être amené en engagement avec un second moyen d'engagement (28) du piston plongeur (4).

12. Ressort pneumatique selon la revendication 11, dans lequel le premier moyen d'engagement (26) du soufflet à air (2) est réalisé sous forme de rétrécissement radial, qui est de préférence renforcé par un élément de soutien (30).

13. Ressort pneumatique selon l'une des revendications 11 ou 12, dans lequel le second moyen d'engagement (28) du piston plongeur (4) est réalisé sous forme d'une gorge périphérique radiale, laquelle est de préférence agencée sur l'extrémité distale (12) du piston plongeur (4) ou au voisinage de celle-ci.

14. Ressort pneumatique selon l'une des revendications 11 à 13, dans lequel le premier et le second moyen d'engagement (26, 28) sont situés hors d'engagement dans la seconde position du soufflet à air (2).

15. Ressort pneumatique selon l'une des revendications précédentes, dans lequel le rapport de la surface de section transversale du soufflet à air (2) sur la surface de section transversale du piston plongeur (4) est sensiblement d'environ 1,1 à 1,5, avantageusement sensiblement d'environ 1,1 à 1,25.

16. Ressort pneumatique selon l'une des revendications précédentes, dans lequel un dispositif à valve est prévu sur le soufflet à air (2), pour empêcher une admission d'air dans le soufflet à air (2), en particulier dans sa première position.

17. Ressort pneumatique selon la revendication 16, **caractérisé en ce que** le dispositif à valve comprend au moins une unité formant valve à la sortie du soufflet à air (2), laquelle peut être actionnée de préférence manuellement ou automatiquement.

18. Système formant essieu de véhicule, comprenant un corps d'essieu essentiellement rigide, et au moins un ressort pneumatique selon l'une des revendications précédentes est agencé sur le corps d'essieu.
